# EUROPÄISCHE PATENTSCHRIFT

(11) **EP 1 695 855 B1**
(45) Veröffentlichungstag und Bekanntmachung des Hinweises auf die Patenterteilung: **10.04.2013**
(21) Anmeldenummer: 06002783.6
(22) Anmeldetag: 11.02.2006
(51) Int. Cl.: B60J 7/20, B62D 25/10

(54) **Verdeckkastendeckel für ein Cabriolet-Fahrzeug**
Lid for top storage compartment for convertible vehicle
Couvercle pour compartiment de rangement de toit de véhicule convertible

(30) Priorität: 23.02.2005 DE 102005008160
(43) Veröffentlichungstag der Anmeldung: 30.08.2006
(73) Patentinhaber: Wilhelm Karmann GmbH, 49084 Osnabrück (DE)
(72) Erfinder: Hesker, Norbert, 48231 Warendorf (DE)
(74) Vertreter: Kronthaler, Schmidt & Coll.

(56) Entgegenhaltungen:
- WO-A2-2004/043723
- DE-A1- 19 933 527
- DE-U1- 29 703 828
- US-A- 5 322 337

## Beschreibung

Die vorliegende Erfindung betrifft einen Verdeckkastendeckel für ein Cabriolet-Fahrzeug.

Üblicherweise werden Verdeckkastendeckel für ein Cabriolet-Fahrzeug mit einer Scheuerleiste (Scheuerschutzleiste) versehen, auf der die Dichtung des Verdeckstoffspannbügels bei geschlossenem Verdeck aufliegt. Die herkömmliche Scheuerleiste ist ein eingesetztes, separates und sehr teures 3D-Aluminiumstreckbiegeteil.

Der Erfindung liegt somit die Aufgabe zugrunde, eine kostengünstigere Scheuerleiste bereitzustellen.

Erfindungsgemäß wird diese Aufgabe gelöst durch einen Verdeckkastendeckel für ein Cabriolet-Fahrzeug, umfassend eine Oberseite aus glasfaserverstärktem Duroplast, insbesondere SMC, und eine auf der Oberseite integral ausgebildete Scheuerleiste. Dabei ist die Oberseite diejenige Seite, die bei auf einen in einem Cabriolet-Fahrzeug eingebauten und den Verdeckkasten abdeckenden Verdeckkastendeckel vertikal nach oben gewandt ist. Günstigerweise besteht die Scheuerleiste aus einer metallischen Beschichtung, die auf der Oberseite aufgebracht ist.

Insbesondere kann dabei vorgesehen sein, daß die metallische Beschichtung eine Chrombeschichtung umfaßt.

Vorteilhafterweise besteht die metallische Beschichtung aus einer unteren Schicht aus Kupfer und einer oberen Schicht aus Chrom.

Gemäß einer besonderen Ausführungsform der Erfindung kann vorgesehen sein, daß der Verdeckkastendeckel eine obere Schale und einem mit diesem verbundenen unteren Schale umfaßt.

Insbesondere kann dabei vorgesehen sein, daß die untere Schale aus glasfaserverstärktem Duroplast, insbesondere SMC, hergestellt ist.

Gemäß einer besonderen Ausführungsform der Erfindung kann vorgesehen sein, daß die obere Schale von der unteren Schale bereichsweise beanstandet ist.

Vorteilhafterweise weist die obere Schale mindestens eine Verstärkungseinrichtung auf.

Ebenfalls vorzugsweise weist die untere Schale mindestens eine Verstärkungseinrichtung auf.

Günstigerweise umfaßt die die Verstärkungseinrichtung eine Materialverstärkung, eine Rippe oder eine entsprechende Geometrie.

Vorteilhafterweise weist die untere Schale mindestens einen Gewindeeinsatz auf.

Gemäß einer weiteren besonderen Ausführungsform der Erfindung kann vorgesehen sein, daß die untere Schale aus einem innenliegenden und einem außenliegenden Teil besteht. Die Angaben "innenliegenden" und "außenliegenden" beziehen sich auf einen in ein Cabriolet-Fahrzeug eingebauten Verdeckkastendeckel, wobei sich die Angabe "innenliegend" auf den Fahrgastraum bezieht, das heißt zum Fahrgastraum hin liegend bedeutet.

Insbesondere kann dabei vorgesehen sein, daß der innenliegende Teil und der außenliegende Teil miteinander gefügt sind.

Vorteilhafterweise sind der innenliegende Teil und der außenliegende Teil durch Kleben miteinander gefügt.

Zweckmäßigerweise ist die Verstärkungseinrichtung im innenliegenden Teil vorgesehen.

Ebenfalls ist der Gewindeeinsatz zweckmäßigerweise im innenliegenden Teil vorgesehen.

Vorteilhafterweise ist/sind der außenliegende und/oder der innenliegende Teil leitfähig grundiert. Dadurch ist der jeweilige Teil oder sind beide Teile mittels kathaphoretischer Tauchlackierung lackierbar.

Vorteilhafterweise ist der außenliegende Teil auf seiner Oberseite mit einer Class A-Decklack-Beschichtung versehen.

Auch kann vorgesehen sein, daß der innenliegende Teil und/oder der außenliegende Teil auf seiner Unterseite mit einer Strukturlack-Beschichtung versehen ist/sind. Durch den Strukturlack (Innenraumfarbe) kann auf eine separate Verkleidung verzichtet werden.

Günstigerweise sind die obere Schale und die untere miteinander gefügt.

Insbesondere kann dabei vorgesehen sein, daß die obere Schale und die untere Schale durch Kleben miteinander gefügt sind.

Auch ist denkbar, daß die obere Schale und die untere Schale miteinander verschraubt sind. Dies kann auch zusätzlich zum Beispiel zum Kleben vorgesehen sein.

Weiterhin ist denkbar, daß die obere Schale die untere Schale nach außen hin nicht vollständig bedeckt.

Günstigerweise ist die obere Schale in einem außenliegenden Bereich durch eine Dichtung zur unteren Schale abgedichtet.

Vorteilhafterweise ist die obere Schale einstückig ausgebildet ist.

Gemäß einer besonders bevorzugten Ausführungsform ist die metallische Beschichtung auf der Oberseite der oberen Schale in einem außenliegenden Bereich vorgesehen.

Auch kann vorgesehen sein, daß im wesentlichen der verbleibende Bereich der Oberseite der oberen Schale mit Leder bezogen ist.

Alternativ kann auch vorgesehen sein, daß im wesentlichen der verbleibende Bereich der Oberseite der oberen Schale mit PVC bezogen ist.

Zweckmäßigerweise ist im wesentlichen der verbleibende Bereich der Oberseite der oberen Schale mit einer Softlack-Beschichtung versehen. Der Softlack kann in der Ausstattungsfarbe des Cabriolet-Fahrzeugs gewählt werden.

Zweckmäßigerweise ist der außenliegende Bereich durch eine Fuge nach innen begrenzt. Dies erleichtert die Beschichtung des außenliegenden Bereiches mit zum Beispiel Kupfer durch zum Beispiel Plasmanitrieren und zum Beispiel anschließendem Verchromen.

Günstigerweise ist in der Fuge ein Keder angeordnet.

Schließlich kann alternativ vorgesehen sein, daß in der Fuge ein Fugenfüller angeordnet ist.

Der Erfindung liegt die überraschende Erkenntnis zugrunde, daß durch die integrierte Scheuerleiste kein teures 3D-Biege-Zulieferteil aus Aluminium und auch dessen Montage nicht erforderlich sind. Dadurch lassen sich erhebliche Kosten sparen.

Weitere Merkmale und Vorteile der Erfindung ergeben sich aus den Ansprüchen und aus der nachstehenden Beschreibung, in der ein Ausführungsbeispiel anhand der schematischen Zeichnungen im einzelnen erläutert ist. Dabei zeigt:
- Figur 1: eine perspektivische Ansicht von einem Verdeckkastendeckel gemäß einer besonderen Ausführungsform der vorliegenden Erfindung von hinten von schräg oben;
- Figur 2: eine Schnittansicht entlang der Linie II-II von Figur 1;

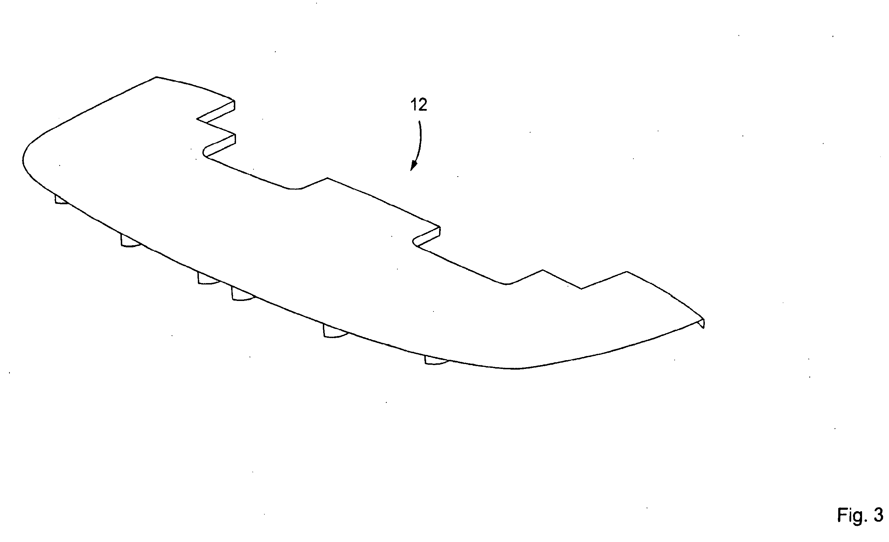

- Figur 3: eine perspektivische Ansicht von der oberen Schale des Verdeckkastendeckels von Figur 1 von schräg oben;
- Figur 4: eine perspektivische Ansicht von der oberen Schale von Figur 3 von schräg unten;
- Figur 5: eine perspektivische Ansicht vom innenliegenden Teil der unteren Schale des Verdeckkastendeckels von Figur 1 von schräg oben; und

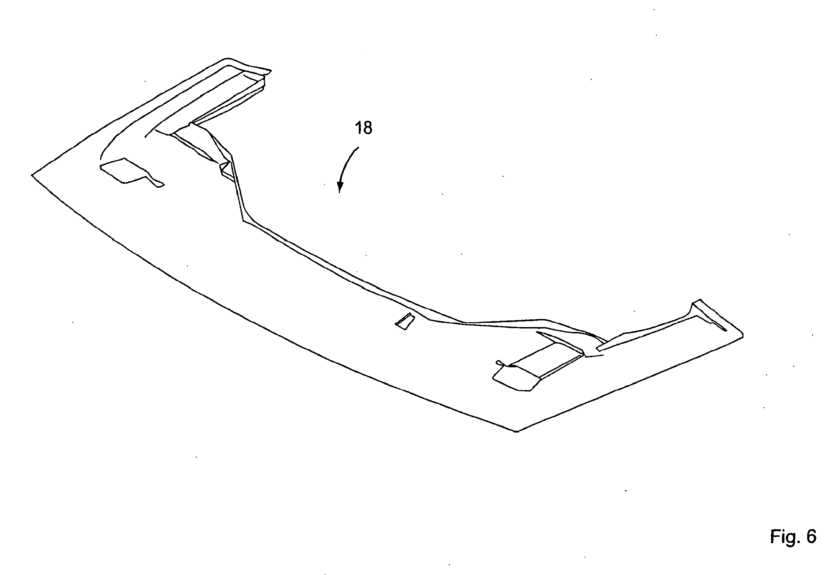

- Figur 6: eine perspektivische Ansicht vom außenliegenden Teil der unteren Schale des Verdeckkastendeckels von Figur 1 von schräg oben.

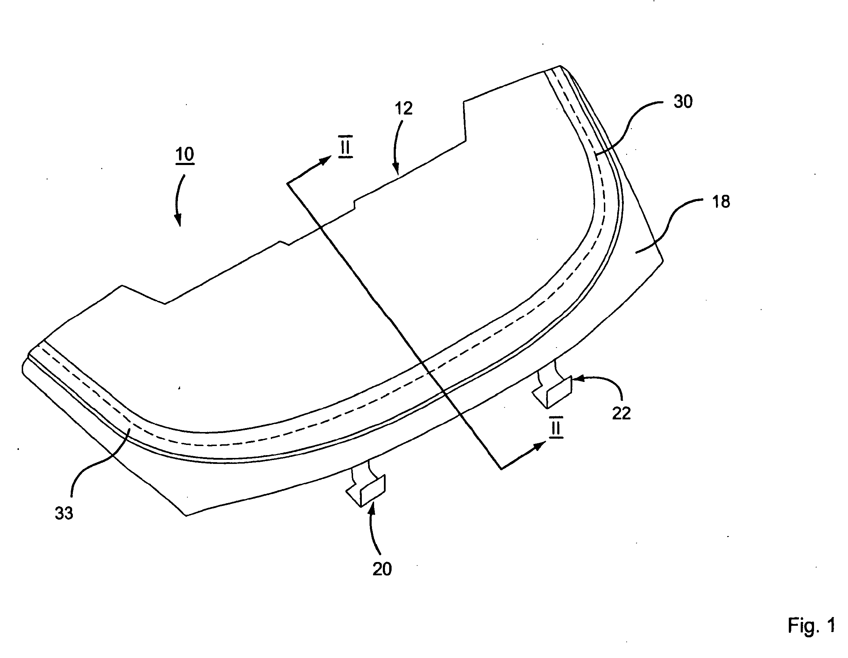

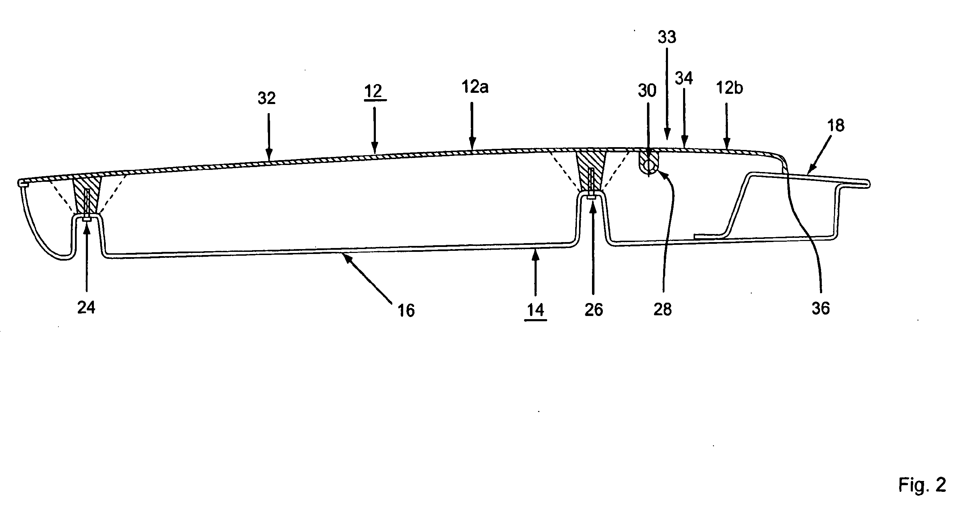

Der in Figur 1 gezeigte Verdeckkastendeckel 10 ist - wie in Figur 2 gezeigt - zweischalig, das heißt aus einer oberen Schale 12 und einer unteren Schale 14 aufgebaut. Die untere Schale 14 besteht aus einem innenliegenden Teil 16, der bei in ein Cabriolet-Fahrzeug (nicht gezeigt) eingebautem und einen Verdeckkasten (nicht gezeigt) abdeckendem Verdeckkastendeckel 10 zur Fahrgastzelle (die sich in Figur 2 auf der linken Seite befinden würde) liegt, und einem sichelförmigen außenliegenden Teil 18. Der innenliegende Teil 16 und der außenliegende Teil 18 sind durch Kleben miteinander verbunden.
Die obere Schale 12 weist geringere Abmessungen in Richtung von innen nach außen auf, so daß in Draufsicht von oben der außenliegende Teil 18 die obere Schale 12 nach außen überragt. An der Unterseite des innenliegenden Teils 16 sind Scharnierarme 20 und 22 zum gelenkigen Befestigen des Verdeckkastendeckels 10 an einer Karosserie (nicht gezeigt) befestigt (siehe Figur 1).

Die obere Schale 12 ist mittels Schrauben, von denen hier nur zwei gezeigt und mit den Bezugszeichen 24 und 26 gekennzeichnet sind, an der unteren Schale 14, genauer gesagt am innenliegenden Teil 16 befestigt. Erforderlichenfalls kann die obere Schale 12 an der unteren Schale 14 zusätzlich durch Kleben befestigt sein. Die obere Schale 12 weist einen innenliegenden Bereich 12a und einen außenliegenden Bereich 12b auf, die durch eine Fuge 28 (siehe Figur 2) voneinander getrennt sind, wobei in der Fuge ein umlaufender Keder 30 angeordnet ist, der in Figur 1 lediglich durch eine gestrichelte Linie dargestellt ist. Der innenliegende Bereich 12a ist mit einem Lederbezug 32 versehen und der außenliegende Bereich 12b ist mit einer Chrombeschichtung 34 versehen, die als eine Scheuerleiste 33 dient.

Nach außen hin ist der außenliegende Bereich 12b zum außenliegenden Teil 18 durch eine umlaufende Dichtung 36 abgedichtet.

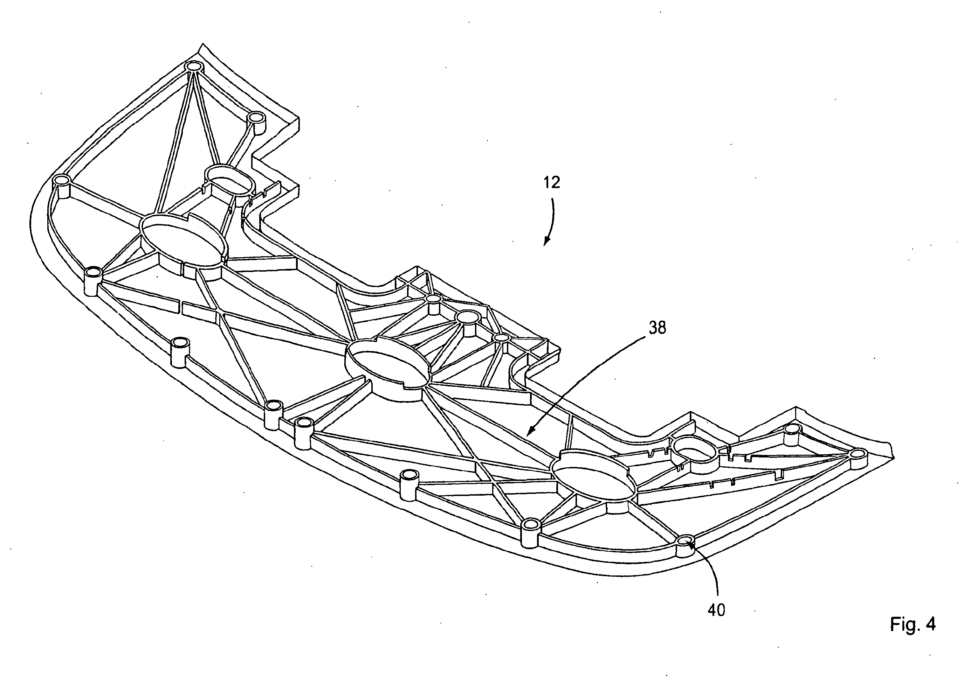

Aus der Figur 4 ergibt sich die Gestaltung der Unterseite der oberen Schale 12. Deutlich sind Rippen zur Verstärkung, von denen nur eine durch das Bezugszeichen 38 gekennzeichnet ist, sowie Gewindeeinsätze zu erkennen, von denen nur einer durch das Bezugszeichen 40 gekennzeichnet ist.

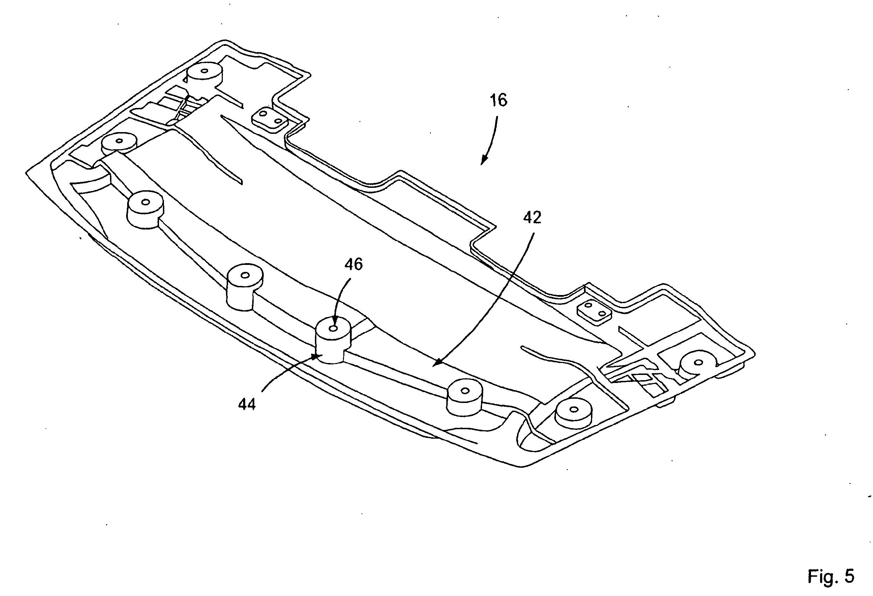

Wie sich aus der Figur 5 ergibt, weist der innenliegende Teil 16 der unteren Schale 14 ebenfalls Rippen zur Verstärkung auf, von denen lediglich eine mit dem Bezugszeichen 42 gekennzeichnet ist. Außerdem sind in den Stirnflächen von zylindrischen Erhebungen, von denen lediglich eine mit dem Bezugszeichen 44 gekennzeichnet ist, Durchgangsbohrungen, von denen lediglich eine mit dem Bezugszeichen 46 gekennzeichnet ist, ausgebildet. Die Durchgangsbohrungen dienen zur Befestigung der oberen Schale 12 an der unteren Schale 14 mittels Schrauben 24, 26, wie dies in Figur 1 gezeigt ist.

Die untere Schale 14 kann im Rohbau aus dem innenliegenden Teil 16 und dem außenliegenden Teil 18 vorbereitet und gegebenenfalls vorlackiert oder innerhalb des Produktionsprozesses mitlackiert werden. Die obere Schale 12 wird separat hergestellt. In der Fertigmontage des Cabriolet-Fahrzeugs wird die obere Schale 12 auf die untere Schale 14 gesetzt, verschraubt und gegebenenfalls zusätzlich verklebt. Dadurch bekommt der Verdeckkastendeckel 10 die finale Steifigkeit und erfüllt er die allgemeinen (Lastenheft)-Anforderungen. Der erfindungsgemäße Verdeckkastendeckel ist aufgrund der integrierten Scheuerleisten deutlich kostengünstiger als herkömmliche Verdeckkastendeckel mit separater Scheuerleiste in Form eines 3D-Schrägbiege-Zuleiferteils aus Aluminium. Er läßt sich zudem mit einem geringeren Montageaufwand herstellen. Wenn gemäß einer besonderen Ausführungsform der Erfindung der gesamte Verdeckkastendeckel aus Kunststoff besteht, so führt dies zu einer weiteren Gewichts- und Kostenreduzierung. Außerdem bietet er mehr Freiheit hinsichtlich des Designs.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### BEZUGSZEICHENLISTE

- 10: Verdeckkastendeckel
- 12: obere Schale
- 14: untere Schale
- 12a: innenliegender Bereich
- 12b: außenliegender Bereich
- 16: innenliegender Teil
- 18: außenliegender Teil
- 20, 22: Scharnierarme
- 24, 26: Schrauben
- 28: Fuge
- 30: Keder
- 32: Lederbezug
- 33: Scheuerleiste
- 34: Chrombeschichtung
- 36: Dichtung
- 38: Rippe
- 40: Gewindeeinsatz
- 42: Verstärkungsrippe
- 44: Erhebung
- 46: Durchgangsbohrung

## Patentansprüche

1. Verdeckkastendeckel (10) für ein Cabriolet-Fahrzeug, umfassend eine Oberseite aus glasfaserverstärktem Duroplast, insbesondere SMC, und eine auf der Oberseite integral ausgebildete Scheuerleiste (33).

2. Verdeckkastendeckel nach Anspruch 1,
**dadurch gekennzeichnet,**
**daß** die Scheuerleiste (33) aus einer metallischen Beschichtung besteht, die auf der Oberseite aufgebracht ist.

3. Verdeckkastendeckel (10) nach Anspruch 2,
**dadurch gekennzeichnet,**
**daß** die metallische Beschichtung eine Chrombeschichtung (34) umfaßt.

4. Verdeckkastendeckel (10) nach Anspruch 2 oder 3,
**dadurch gekennzeichnet,**
**daß** die metallische Beschichtung aus einer unteren Schicht aus Kupfer und einer oberen Schicht aus Chrom besteht.

5. Verdeckkastendeckel (10) nach einem der vorangehenden Ansprüche,
**dadurch gekennzeichnet,**
**daß** er eine obere Schale (12) und eine mit dieser verbundene untere Schale (14) umfaßt.

6. Verdeckkastendeckel nach Anspruch 5, **dadurch gekennzeichnet,**
**daß** die obere und die untere Schale (14) aus glasfaserverstärktem Duroplast, insbesondere SMC, hergestellt sind.

7. Verdeckkastendeckel (10) nach Anspruch 5 oder 6,
**dadurch gekennzeichnet,**
**daß** die obere Schale (12) von der unteren Schale (14) nur bereichsweise beabstandet ist.

8. Verdeckkastendeckel (10) nach einem der Ansprüche 5 bis 7,
**dadurch gekennzeichnet,**
**daß** die obere Schale (12) mindestens eine Verstärkungseinrichtung aufweist.

9. Verdeckkastendeckel (10) nach einem der Ansprüche 5 bis 7,
**dadurch gekennzeichnet,**
**daß** die untere Schale (14) mindestens eine Verstärkungseinrichtung aufweist.

10. Verdeckkastendeckel (10) nach Anspruch 8 oder 9,
**dadurch gekennzeichnet,**
**daß** die Verstärkungseinrichtung eine Materialverstärkung, eine Rippe (38, 42) oder eine entsprechende Geometrie umfaßt.

11. Verdeckkastendeckel (10) nach einem der Ansprüche 5 bis 10,
**dadurch gekennzeichnet,**
**daß** die untere Schale (14) mindestens einen Gewindeeinsatz (40) aufweist.

12. Verdeckkastendeckel (10) nach einem der Ansprüche 5 bis 11,
**dadurch gekennzeichnet,**
**daß** die untere Schale (14) aus einem innenliegenden (16) und einem außenliegenden Teil (18) besteht.

13. Verdeckkastendeckel (10) nach Anspruch 12,
**dadurch gekennzeichnet,**
**daß** der innenliegende (16) und der außenliegende Teil (18) miteinander gefügt sind.

14. Verdeckkastendeckel (10) nach Anspruch 13,
**dadurch gekennzeichnet,**
**daß** der innenliegende Teil (16) und der außenliegende Teil (18) durch Kleben miteinander gefügt sind.

15. Verdeckkastendeckel (10) nach einem der Ansprüche 12 bis 14,
**dadurch gekennzeichnet,**
**daß** die Verstärkungseinrichtung im innenliegenden Teil (16) vorgesehen ist.

16. Verdeckkastendeckel (10) nach einem der Ansprüche 12 bis 15,
**dadurch gekennzeichnet,**
**daß** der Gewindeeinsatz (40) im innenliegenden Teil (16) vorgesehen ist.

17. Verdeckkastendeckel (10) nach einem der Ansprüche 12 bis 16,
**dadurch gekennzeichnet,**
**daß** der außenliegende (18) und/oder der innenliegende Teil (16) leitfähig grundiert ist/sind.

18. Verdeckkastendeckel (10) nach einem der Ansprüche 12 bis 17,
**dadurch gekennzeichnet,**
**daß** der außenliegende Teil (18) auf seiner Oberseite mit einer Class A-Decklack-Beschichtung versehen ist.

19. Verdeckkastendeckel (10) nach einem der Ansprüche 12 bis 18,
**dadurch gekennzeichnet,**
**daß** der innenliegende Teil (16) und/oder der außenliegende Teil (18) auf seiner Unterseite mit einer Strukturlack-Beschichtung versehen ist/sind.

20. Verdeckkastendeckel (10) nach einem der Ansprüche 5 bis 19,
**dadurch gekennzeichnet,**
**daß** die obere Schale (12) und die untere Schale (14) miteinander gefügt sind.

21. Verdeckkastendeckel (10) nach Anspruch 20,
**dadurch gekennzeichnet,**
**daß** die obere Schale (12) und die untere Schale (14) durch Kleben miteinander gefügt sind.

22. Verdeckkastendeckel (10) nach Anspruch 20 oder 21,
**dadurch gekennzeichnet,**
**daß** die obere Schale (12) und die untere Schale (14) miteinander verschraubt sind.

23. Verdeckkastendeckel (10) nach einem der Ansprüche 5 bis 22,
**dadurch gekennzeichnet,**
**daß** die obere Schale (12) die untere Schale (14) nach außen hin nicht vollständig bedeckt.

24. Verdeckkastendeckel (10) nach Anspruch 23,
**dadurch gekennzeichnet,**
**daß** die obere Schale (12) in einem außenliegenden Bereich (12b)durch eine Dichtung (36) zur unteren Schale (14) abgedichtet ist.

25. Verdeckkastendeckel (10) nach einem der Ansprüche 5 bis 24,
**dadurch gekennzeichnet,**
**daß** die obere Schale (12) einstückig ausgebildet ist.

26. Verdeckkastendeckel (10) nach einem der Ansprüche 5 bis 25,
**dadurch gekennzeichnet,**
**daß** die metallische Beschichtung auf der Oberseite der oberen Schale (12) in einem außenliegenden Bereich (12b) vorgesehen ist.

27. Verdeckkastendeckel (10) nach Anspruch 26,
**dadurch gekennzeichnet,**
**daß** im wesentlichen der verbleibende Bereich der Oberseite der oberen Schale (12) mit Leder bezogen ist.

28. Verdeckkastendeckel (10) nach Anspruch 26,
**dadurch gekennzeichnet,**
**daß** im wesentlichen der verbleibende Bereich der Oberseite der oberen Schale (12) mit PVC bezogen ist.

29. Verdeckkastendeckel (10) nach Anspruch 26,
**dadurch gekennzeichnet,**
**daß** im wesentlichen der verbleibende Bereich der Oberseite der oberen Schale (12) mit einer Softlack-Beschichtung versehen ist.

30. Verdeckkastendeckel (10) nach einem der Ansprüche 26 bis 29,
**dadurch gekennzeichnet,**
**daß** der außenliegende Bereich (12b) durch eine Fuge (28) nach innen begrenzt ist.

31. Verdeckkastendeckel (10) nach Anspruch 30,
**dadurch gekennzeichnet,**
**daß** in der Fuge (28) ein Keder (30) angeordnet ist.

32. Verdeckkastendeckel (10) nach Anspruch 30,
**dadurch gekennzeichnet,**
**daß** in der Fuge (28) ein Fugenfüller angeordnet ist.

## Claims

1. A hood compartment cover (10) for a convertible vehicle, comprising an upper surface of glass fibre-reinforced duroplast, in particular SMC, and a scuff moulding (33) formed integrally on said upper surface.

2. The hood compartment cover according to claim 1, **characterised in that** said scuff moulding (33) consists of a metallic coating applied to said upper surface.

3. The hood compartment cover (10) according to claim 2, **characterised in that** the metallic coating comprises a chromium coating (34).

4. The hood compartment cover (10) according to claim 2 or 3, **characterised in that** said metallic coating consists of a lower layer of copper and an upper layer of chromium.

5. The hood compartment cover (10) according to any one of the preceding claims, **characterised in that** it comprises an upper shell (12) and a lower shell (14) connected with said upper shell (12).

6. The hood compartment cover according to claim 5, **characterised in that** the upper shell and the lower shell (14) are made from glass fiber-reinforced duroplast, in particular SMC.

7. The hood compartment cover (10) according to claim 5 or 6, **characterised in that** the upper shell (12) is spaced apart from the lower shell (14) only in some areas.

8. The hood compartment cover (10) according to any one of claims 5 to 7, **characterised in that** the upper shell (12) comprises at least one reinforcing means.

9. The hood compartment cover (10) according to any one of claims 5 to 7, **characterised in that** the lower shell (14) comprises at least one reinforcing means.

10. The hood compartment cover (10) according to claim 8 or 9, **characterised in that** the reinforcing means comprises a material reinforcement, a rib (38, 42) or a suitable geometry.

11. The hood compartment cover (10) according to any one of claims 5 to 10, **characterised in that** the lower shell (14) comprises at least one thread insert (40).

12. The hood compartment cover (10) according to any one of claims 5 to 11, **characterised in that** the lower shell (14) consists of an internal part (16) and an external part (18).

13. The hood compartment cover (10) according to claim 12, **characterised in that** said internal part (16) and said external part (18) are joined together.

14. The hood compartment cover (10) according to claim 13, **characterised in that** said internal part (16) and said external part (18) are joined together by adhesion.

15. The hood compartment cover (10) according to any one of claims 12 to 14, **characterised in that** the reinforcing means is provided in the internal part (16).

16. The hood compartment cover (10) according to any one of claims 12 to 15, **characterised in that** the thread insert (40) is provided in the internal part (16).

17. The hood compartment cover (10) according to any one of claims 12 to 16, **characterised in that** the external part (18) and/or the internal part (16) is/are conductively primed.

18. The hood compartment cover (10) according to any one of claims 12 to 17, **characterised in that** the external part (18) is provided with a Class A-topcoat varnish on its upper surface.

19. The hood compartment cover (10) according to any one of claims 12 to 18, **characterised in that** the lower surface of the internal part (16) and/or of the external part (18) is/are provided with a textured varnish coating.

20. The hood compartment cover (10) according to any one of claims 5 to 19, **characterised in that** the upper shell (12) and the lower shell (14) are joined together.

21. The hood compartment cover (10) according to claim 20, **characterised in that** the upper shell (12) and the lower shell (14) are joined together by adhesion.

22. The hood compartment cover (10) according to claim 20 or 21, **characterised in that** the upper shell (12) and the lower shell (14) are screw-connected with each other.

23. The hood compartment cover (10) according to any one of claims 5 to 22, **characterised in that** the upper shell (12) does not fully cover the lower shell (14) externally.

24. The hood compartment cover (10) according to claim 23, **characterised in that** the upper shell (12) is sealed in an external region (12b) by a seal (36) against the lower shell (14).

25. The hood compartment cover (10) according to any one of claims 5 to 24, **characterised in that** the upper shell (12) is formed in one piece.

26. The hood compartment cover (10) according to any one of claims 5 to 25, **characterised in that** the metallic coating on the upper surface of the upper shell (12) is provided in an external region (12b).

27. The hood compartment cover (10) according to claim 26, **characterised in that** substantially the remaining area of the upper surface of the upper shell (12) is covered with leather.

28. The hood compartment cover (10) according to claim 26, **characterised in that** substantially the remaining area of the upper surface of the upper shell (12) is coated with PVC.

29. The hood compartment cover (10) according to claim 26, **characterised in that** substantially the remaining area of the upper surface of the upper shell (12) is provided with a soft-varnish coating.

30. The hood compartment cover (10) according to any one of claims 26 to 29, **characterised in that** the external region (12b) is inwardly limited by a joint (28).

31. The hood compartment cover (10) according to claim 30, **characterised in that** a welt (30) is arranged in said joint (28).

32. The hood compartment cover (10) according to claim 30, **characterised in that** a joint filler is arranged in said joint (28).

## Revendications

1. Couvercle (10) pour le compartiment de capote d'un véhicule cabriolet, ledit couvercle comprenant une face supérieure en matière plastique thermodurcissable renforcé par des fibres de verre, notamment en SMC, et une plinthe (33) réalisée intégralement sur ladite face supérieure.

2. Couvercle selon la revendication 1, **caractérisé en ce que** ladite plinthe (33) consiste d'un revêtement métallique appliqué sur ladite face supérieure.

3. Couvercle (10) selon la revendication 2, **caractérisé en ce que** le revêtement métallique comprend un revêtement en chrome (34).

4. Couvercle (10) selon la revendication 2 ou 3, **caractérisé en ce que** ledit revêtement métallique consiste d'une couche inférieure en cuivre et d'une couche supérieure en chrome.

5. Couvercle (10) selon l'une quelconque des revendications précédentes, **caractérisé en ce qu'**il comprend une enveloppe supérieure (12) et une enveloppe inférieure (14) reliée à cette première.

6. Couvercle selon la revendication 5, **caractérisé en ce que** ladite enveloppe supérieure et ladite enveloppe inférieure (14) sont réalisées en matière plastique thermodurcissable renforcé par des fibres de verre, notamment en SMC.

7. Couvercle (10) selon la revendication 5 ou 6, **caractérisé en ce que** ladite enveloppe supérieure (12) n'est écartée de ladite enveloppe inférieure (14) que dans certaines régions.

8. Couvercle (10) selon l'une quelconque des revendications 5 à 7, **caractérisé en ce que** ladite enveloppe supérieure (12) comprend au moins un moyen de renforcement.

9. Couvercle (10) selon l'une quelconque des revendications 5 à 7, **caractérisé en ce que** ladite enveloppe inférieure (14) comprend au moins un moyen de renforcement.

10. Couvercle (10) selon la revendication 8 ou 9, **caractérisé en ce que** le moyen de renforcement comprend un renforcement de matériau, une nervure (38, 42) ou une géométrie adéquate.

11. Couvercle (10) selon l'une quelconque des revendications 5 à 10, **caractérisé en ce que** ladite enveloppe inférieure (14) comprend au moins un insert fileté (40).

12. Couvercle (10) selon l'une quelconque des revendications 5 à 11, **caractérisé en ce que** ladite enveloppe inférieure (14) est constituée d'une partie intérieure (16) et d'une partie extérieure (18).

13. Couvercle (10) selon la revendication 12, **caractérisé en ce que** ladite partie intérieure (16) et ladite partie extérieure (18) sont jointées l'une à l'autre.

14. Couvercle (10) selon la revendication 13, **caractérisé en ce que** ladite partie intérieure (16) et ladite partie extérieure (18) sont jointées l'une à l'autre par collage.

15. Couvercle (10) selon l'une quelconque des revendications 12 à 14, **caractérisé en ce que** le moyen de renforcement est disposé dans la partie intérieure (16).

16. Couvercle (10) selon l'une quelconque des revendications 12 à 15, **caractérisé en ce que** l'insert fileté (40) est disposé dans la partie intérieure (16).

17. Couvercle (10) selon l'une quelconque des revendications 12 à 16, **caractérisé en ce qu'**une première couche conductive est appliquée sur la partie extérieure (18) et/ou la partie intérieure (16).

18. Couvercle (10) selon l'une quelconque des revendications 12 à 17, **caractérisé en ce que** la partie extérieure (18) présente sur sa face supérieure un revêtement supérieur de classe A.

19. Couvercle (10) selon l'une quelconque des revendications 12 à 18, **caractérisé en ce que** la face inférieure de la partie intérieure (16) et/ou de la partie extérieure (18) est/sont revêtue(s) d'une laque de structure.

20. Couvercle (10) selon l'une quelconque des revendications 5 à 19, **caractérisé en ce que** ladite enveloppe supérieure (12) et ladite enveloppe inférieure (14) sont jointées l'une à l'autre.

21. Couvercle (10) selon la revendication 20, **caractérisé en ce que** ladite enveloppe supérieure (12) et ladite enveloppe inférieure (14) sont jointées l'une à l'autre par collage.

22. Couvercle (10) selon la revendication 20 ou 21, **caractérisé en ce que** ladite enveloppe supérieure (12) et ladite enveloppe inférieure (14) sont reliées l'une à l'autre par vissage.

23. Couvercle (10) selon l'une quelconque des revendications 5 à 22, **caractérisé en ce que** ladite enveloppe supérieure (12) ne couvre pas entièrement l'extérieur de l'enveloppe inférieure (14).

24. Couvercle (10) selon la revendication 23, **caractérisé en ce que** ladite enveloppe supérieure (12) est étanchée par rapport à ladite enveloppe inférieure (14) par un joint d'étanchéité (36) dans une région extérieure (12b).

25. Couvercle (10) selon l'une quelconque des revendications 5 à 24, **caractérisé en ce que** ladite enveloppe supérieure (12) est réalisée en une seule pièce.

26. Couvercle (10) selon l'une quelconque des revendications 5 à 25, **caractérisé en ce que** le revêtement métallique sur la face supérieure de l'enveloppe supérieure (12) est réalisée dans une région extérieure (12b).

27. Couvercle (10) selon la revendication 26, **caractérisé en ce que** sensiblement le reste de la face supérieure de l'enveloppe supérieure (12) est couvert de cuir.

28. Couvercle (10) selon la revendication 26, **caractérisé en ce que** sensiblement le reste de la face supérieure de l'enveloppe supérieure (12) est couvert de PVC.

29. Couvercle (10) selon la revendication 26, **caractérisé en ce que** sensiblement le reste de la face supérieure de l'enveloppe supérieure (12) présente un revêtement en vernis mou.

30. Couvercle (10) selon l'une quelconque des revendications 26 à 29, **caractérisé en ce que** la région extérieure (12b) est limitée vers l'intérieur par une jointure (28).

31. Couvercle (10) selon la revendication 30, **caractérisé en ce qu'**un bourrelet (30) est disposé dans ladite jointure (28).

32. Couvercle (10) selon la revendication 30, **caractérisé en ce qu'**une fine pour jointure est disposée dans ladite jointure (28).
